# EUROPEAN PATENT SPECIFICATION

(11) **EP 0 492 725 B1**
(45) Date of publication and mention of the grant of the patent: **05.03.1997**
(21) Application number: 91203351.1
(22) Date of filing: 18.12.1991
(51) Int. Cl.: H04N 5/94

(54) **Horizontal adaptive error concealment system for component digital television signals**
Adaptives Horizontalfehlerverdeckungssystem für digitale Fernsehkomponentensignale
Système adaptatif de dissimulation d'erreurs horizontales pour des signaux de télévision sous forme de composante digitale

(30) Priority: 21.12.1990 US 632287
(43) Date of publication of application: 01.07.1992
(73) Proprietor: AMPEX SYSTEMS CORPORATION, Redwood City, California 94063-3199 (US)
(72) Inventor: Williams, Robert A., Los Altos, California 94022 (US)
(74) Representative: Horton, Andrew Robert Grant

(56) References cited:
- EP-A- 0 345 872
- DE-A- 3 114 275
- DE-A- 3 719 405
- FR-A- 2 515 911
- US-A- 4 377 820

## Description

### BACKGROUND OF THE INVENTION

The invention relates to an error concealment system for component digital video signal systems and, in particular, to an error concealment system which replaces an erroneous pixel by adaptively filtering a large number, e.g., 16, adjacent horizontal pixels, half on each side, while uniquely weighting the pixel values being used in the calculation to compensate for any corrupted adjacent pixels.

As is well known in the art, errors occur in the handling of video signals such as, for example, when recording and reproducing television signals via magnetic tape record/reproduce systems. Such errors occur, for example, due to noise or to dropouts occurring during the record/reproduce process, and cause the corruption of the reproduced signals. That is, the reproduced television signal does not correspond exactly to the original signal, and the resulting displayed television picture is degraded.

There are two main approaches to dealing with errors in digital television signals. The first approach is error correction, which involves the production and use of additional data signals purely for the purposes of error detection and correction, wherein the additional data signals otherwise are redundant. While the error correction process provides preferred results, it requires an excessive amount of additional data and thus cannot generally be used as the sole means of dealing with errors.

The second approach is error concealment, and is the process of concern in this application. Concealment utilizes the replacement of an erroneous data signal by a data signal generated from available uncorrupted data signals. In the field of television, the concealment approach relies largely on the strong correlation that exists in a television signal, to provide accuracy. In the case of such television signals which contain large amounts of redundancy, individual bits usually do not contain vital information. Thus knowledge of errors in the signal may be exploited to maintain acceptable signal quality. It may be said then that the error concealment process simply consists of hiding the error. For example, if an error detector indicates that the digital word corresponding to a pixel, that is, to a video sample, contains an error that cannot be corrected, such error may be hidden by replacing the erroneous pixel by an interpolated pixel whose value closely approximates what would be the correct pixel value.

As well known in the art, there are various interpolation techniques used in providing error concealment in either a television composite signal system, or a component signal system, which techniques include, for example, previous pixel repetition, extrapolation using two or more previous pixels and interpolation between preceding and following pixels.

Typical of error concealment schemes used in component signal systems, are schemes which determine the amount of information from pixels which extend in a selected direction along a line passing through an erroneous pixel. More particularly, such schemes provide a replacement pixel for the erroneous pixel by averaging pixels in a selected direction if the information in said direction is less than a preselected threshold, and averaging pixels in another direction if the information in said direction is greater than the selected threshold. The more typical of such schemes generally uses only two directions of adaptive filtering, uses simple averaging filters, and requires that all surrounding samples be error free. This limits the type of picture material and the error levels generally preferred for adequate concealment. In addition, such systems generally implement the adaption process by looking in a single direction such as, for example, the horizontal direction.

In an alternate concealment scheme, a replacement pixel may be provided from pixels extending in several directions from the erroneous pixel. The replacement pixels taken from any of the directions which generally lie along a respective line which passes through the erroneous pixel. The correction value in the direction having the smallest value is used to replace the erroneous pixel. In the event one pixel in a particular direction is incorrect, the accumulated value derived from that line of pixels is discarded entirely. Thus, the replacement values from one or more directions may be discarded in their entirety and accordingly, valid samples in such direction also are not used in any way to calculate the optimum concealment replacement value. It follows therefore that this system requires that all surrounding samples be error free. Although this scheme is preferred to the two-direction scheme of previous mention, it does not provide an optimized concealment system since it does not utilize all adjacent pixels that are valid in the calculation for a replacement pixel, but instead discards valid adjacent pixels in a direction in which a corrupted adjacent pixel is found.

The invention is defined in the claims; the pre-characterising parts of the independent claims correspond to DE-A-3719405.

The present invention overcomes the shortcomings of the prior art in that it provides preferred concealment of errors in a component signal system under more varied picture and error conditions. Further, optimal concealment is provided employing a relatively simple FIR filter which, however, contains a large number of taps for deriving a pixel replacement value from a single horizontal line of adjacent pixels. To this end, the invention system replaces an initial erroneous pixel by evaluating, for example, of the order of 16 correct pixels which lie along the same horizontal line as the erroneous pixel, and by then weighting the pixels to compensate for any incorrect pixels which are being used in the calculation for the replacement sample. In particular, the invention expands the filtering process to eight pixels on either horizontal side of the erroneous pixel. This increases the bandwidth significantly so that picture material containing fine detail can be adequately concealed for errors. In addition, the filtering process also is adaptive in that adjacent corrupted pixels along the horizontal line are not used in the filtering process, and the weighting coefficients of the remaining good pixels which are used in the calculations are modified accordingly, to allow the proper concealment of a wide variety of error conditions. That is, the error pattern of the adjacent pixels is used to modify previously selected weighting coefficients of the remaining adjacent good pixels. Optimal values for the weighting coefficients are calculated by computer simulation using a digital frequency sweep pattern and minimizing the mean squared error of the pixel replacement value. The net advantage is to create a digital filter with acceptable error characteristics with maximum bandwidth for best image quality.

Thus, the invention provides an error concealment technique for preferably a component video signal system, which adaptively uses a large number of adjacent correct pixels in the horizontal direction to provide the concealment information. In particular, the invention technique discards any corrupted adjacent pixel to be used in the calculation for the replacement pixel value, while modifying the weighting of the remaining adjacent correct pixels in accordance with the error pattern resulting from the corrupted pixel or pixels. In addition, the invention multiplies the plurality of pixels by the respective selected and modified weighting coefficients and, if the modified weighted sum of the products exceeds a selected range of valid video values, detects such condition and uses, for example, the most recent valid pixel value rather than the unacceptable overflow value.

### BRIEF DESCRIPTION OF THE DRAWINGS

FIGURE 1 is a pictorial view of an erroneous pixel and a large plurality of successively adjacent horizontal pixels used to provide error concealment information.

FIGURE 2 is a block diagram depicting an embodiment of the invention combination.

FIGURES 3 and 4 are schematic diagrams of the error pattern register and overflow handling circuits of the block diagram of FIG. 2.

### DESCRIPTION OF THE PREFERRED EMBODIMENTS

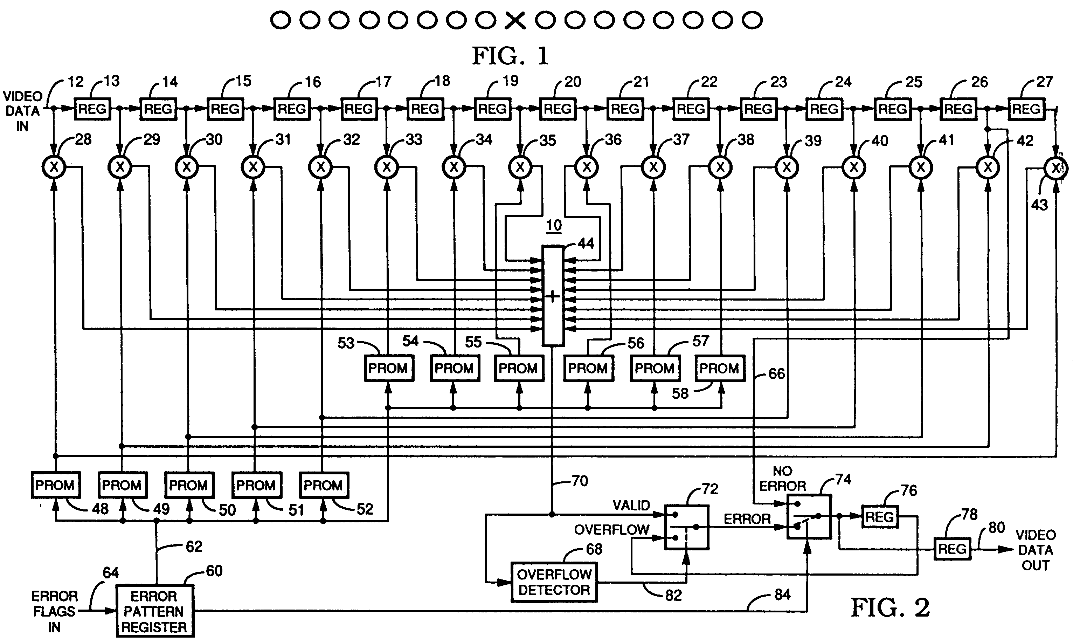

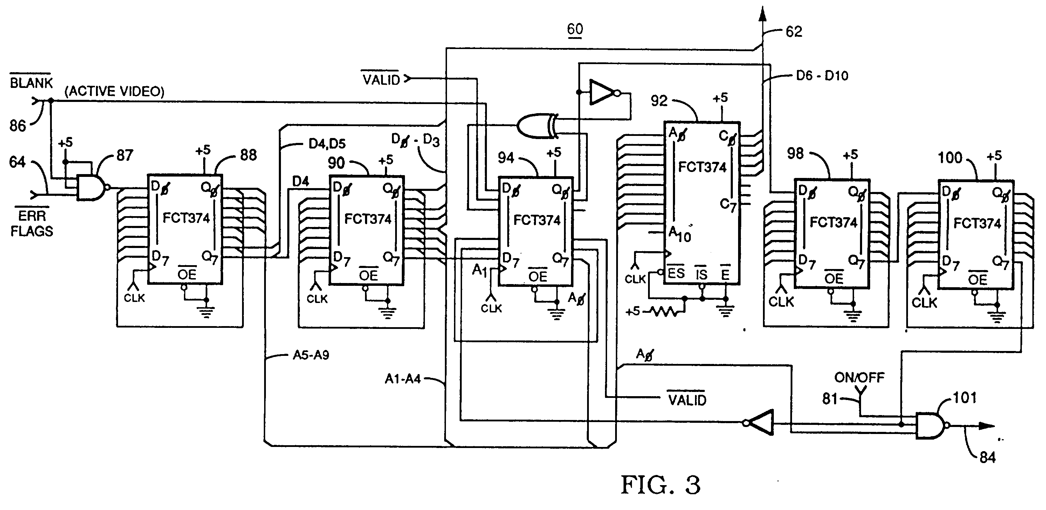

Referring to FIG. 1, there is depicted a plurality of pixels disposed sequentially adjacent on the same horizontal line as an initial erroneous pixel. Valid pixels are designated by an O, while the erroneous pixel is designated by an X. By way of example only, and as further described below, each pixel value supplied to the error concealment system is digitally encoded in 8 bits and is accompanied by an error flag of 1 bit. The latter bit indicates whether an associated adjacent pixel is valid or erroneous. The digital samples corresponding to the erroneous pixel and the successively adjacent pixels are made available in a serial stream as described hereinbelow in the discussion of FIGs. 2 and 3. In accordance with the invention, and by way of example only, the technique generally provides eight successive pixels immediately preceding and immediately following the erroneous pixel on the same horizontal line.

Referring now to FIG. 2, there is illustrated by way of example, a circuit for performing the adaptive error concealment of the invention. The upper half page of the circuitry consists of essentially a finite impulse response (FIR) filter 10, which has the capability of changeable coefficients at any sample point. Generally FIR filters have fixed coefficients which can not be changed on a sample-by-sample basis. Thus the FIR filter 10 of FIG. 2 typically is termed a time variant FIR filter.

A VIDEO DATA IN signal is supplied on an input bus 12 and may comprise, for example, a luminance component signal or a color signal formed of chrominance components (R-Y,B-Y). Thus, the present error concealment system generally provides the concealment process for a baseband video signal such as, for example, a component color television signal. A separate channel is provided for processing the luminance signal independently of the chrominance signal. The signal is supplied as 8 bit video data to a plurality of serially connected registers 13-27, via the bus 10. As may be seen, the register 20 is a centrally located register, with seven registers 13-19 successively preceding the register 20, and with seven registers 21-27 successively following the register 20. However, the register 20 is a double register, wherein the first of the registers is the center register which supplies the erroneous pixel and which acoordingly is not used. The second of the double register is used as the output of register 20. Thus the FIR filter 10 generally is symmetrical about its center. The 8 bit video data, whether a luminance signal or chrominance difference signals, are consecutively delayed by the series of registers 13-27, with each sample being delayed by one dock time interval. Thus, in essence, the registers 13-27 define a long shift register. The samples are available at the outputs of respective registers in a continuous block along the horizontal line. Thus, there are 16 samples available starting at the input bus 12 and extending through the registers 13-27.

The video data input bus 12, as well as the output of each of the registers 13-27 are, in turn, coupled to respective multipliers of a series of multipliers 28-43. The outputs of the multipliers 28-43 thence are coupled to an adder means 44. The registers, multiplier and the adders means comprise in essence the FIR filter 10 of previous mention.

A second input to the multipliers 28-43 is supplied by a series of programmable read only memories (PROM) 48-58 in the preferred embodiment described herein by way of example. The PROM's supply sets of coefficients to the multipliers, 28-43, which then respectively multiply the pixel sample supplied thereto by the coefficient supplied from the PROM's 48-58. Since the filter 10 is a symmetrical filter about its center, (except as discussed below) the very first and last samples from the input bus 10 and the register 27 respectively, are multiplied via the multipliers 28 and 43 by the same coefficient supplied by the PROM 48. Likewise the second sample from register 13 and the second-to-last sample from register 26 are multiplied, via the multipliers 29 and 42, by the same coefficient from the PROM 49, and so on down the line of registers 13-16 and 23-27 and PROMs 48-52. The use of a symmetrical filter is advantageous in that it is a linear phase filter which does not suffer phase distortions, and is a filter with a more economical configuration. However, it is understood that a separate PROM may be provided for supplying a coefficient to each of the multipliers, particularly if the filter is not symmetrical, or partially non-symmetrical, or partially non-symmetrical. To this end, the PROMs 53-58 supply respective coefficients to the multipliers 33-38, whereby the samples from the registers 17-22 are multiplied by their respective coefficient. Such a configuration allows more flexibility of operation while reducing the hardware requirement.

In turn, the PROMs 48-58 are driven by an error pattern register 60 via a bus 62, in response to an error flag signal input on an error flag line 64. The error flag may be, for example, a 9th bit extracted from the video data signal supplied to the input bus 12, which bit accompanies and validates or invalidates the associated 8 bits of video data supplied to the multipliers 28-43. The error flag indicates whether the respective 8 bits of video data being supplied to the multipliers are in fact corrupted. Thus the error flags are provided at the clock rate and are stored in the error pattern register 60 in a one-for-one relationship with the incoming video data on the input 12. The error pattern register 60 is in essence a bank of 16 registers, each only 1 bit wide. The resulting error pattern SELECTION signal commensurate with an existing error pattern is supplied to the PROMs 48-58, and is an 11 bit binary control signal which selects that set of coefficients which corresponds to a specific pixel error pattern.

It may be seen that the PROMs 48-58 are driven by the error pattern determined via the error pattern register 60. Given the configuration of 8 successively adjacent bits on either side of the erroneous pixel, there are 16 bits of error pattern possible. That is, there are 2¹⁶ or 65,000 error patterns possible. The values of the sets of coefficients are determined by the error pattern which, in turn, is determined by the location of a corrupted pixel or pixels in the 16 pixels successively adjacent to the erroneous pixel shown in FIG 1. Thus the PROMs 48-58 supply the multipliers 28-43 with a particular set of filter coefficients based on the error pattern selection signal 62 supplied by the error pattern register 60.

The coefficients stored in the PROMs 48-58 may be derived by computer simulation based on the error patterns possible. The values were derived by a computer program that took into account the critical picture material provided by a test pattern such as that known in the television field as a "circular zone plate". The computer then generates a coefficient for every combination of possible error patterns and determines a set of coefficients for each error pattern that would provide the best filter response. That is, the computer program determines the coefficients that produce the maximum possible bandwidth with minimum acceptable level of ripple for the pass band of the respective bandwidth. Once the sets of coefficients for each filter is determined, the coefficients are programmed into the PROMs 48-58. It follows that for any possible error pattern that may exist in the pixels successively adjacent an erroneous pixel, and in response to the error pattern signal on the bus 62, the PROMs instantly supply the corresponding set of coefficients which are required to calculate the best replacement pixel value for the erroneous pixel.

Further in accordance with the invention, an overflow circuit is provided to determine whether the large number of bits being added exceed the range of 8 bits, or whatever number of bits are being used. In addition, a NO ERROR bus 66 is provided to the overflow circuit, whereby valid pixel samples are supplied to the overflow circuit. In response to the error pattern register 60, the valid samples are by-passed around the FIR filter 10 in the event that no erroneous or corrupted pixels are detected in the video data stream, and are supplied as a video data output signal as discussed below.

To this end, by way of example in FIG. 2, an overflow detector 68 and a VALID input of a first switch means 72 are coupled to the adder means 44 via a bus 70, and receive therefrom a replacement pixel sample generated by the FIR filter 10. The output of the switch means 72 is coupled in turn to an ERROR input of a second switch means 74. The output of the register 26 comprises the NO ERROR signal on bus 66, which is coupled to the NO ERROR input of the switch means 74. Bus 66 provides a path for the valid data sample when there is no erroneous or corrupted pixel. The output of switch means 74 is fed back to an OVERFLOW input of the switch means 72 via a register 76. The output of switch 74 also is coupled to a register 78 which provides either the calculated replacement pixel sample, or passes the valid pixel sample, as the VIDEO DATA OUT signal via a bus 80. The overflow detector 68 provides a control signal for switching the switch means 72 to either the VALID or OVERFLOW switch position. The error pattern register 60 provides a control signal via a line 84 for switching the switch means 74 between the ERROR or NO ERROR switch positions.

As may be seen from the block diagram, if the system overflows, the overflow detector 68 detects the condition and switches the switch means 72 to the OVERFLOW position. The last good sample which is available via the register 76 then is supplied as the replacement pixel on output bus 80 via the switch means 72, the switch means 74 and the register 78.

In addition, the switch means 74 provides means for insuring that only an erroneous sample is replaced by the FIR filter 10. In the event that there are no erroneous or corrupted samples, the valid samples are passed through the circuitry via the bus 66, and the switch means 74, in response to the control signal from the error pattern register 60 on the line 84. Thus, the switch means 74 is kept in the NO ERROR position until such time as the error pattern register 60 determines the presence of erroneous pixel and changes the switch means 74 to the ERROR position to pass the calculated replacement pixel. During the same time, the register 60 supplies the set of filter coefficients determined by the error pattern to the multipliers. Thus, the video data output on the bus 80 is either any valid pixel samples supplied to the video data input bus 12, or are replacement pixel samples generated by the FIR filter 10 and supplied via the bus 70 and switch means 72,74.

There are various circuit configurations for the adder means 44 of FIG. 2 which are capable of adding a large plurality of values such as the 16 samples herein. For example, an adder tree configuration may be utilized which successively adds selected groups of samples through successive addition stages. Further, multi-tap FIR filters, and the PROMs 48-58 and their connections to the FIR filter, are generally known in the art. Accordingly, these components therefore are not further described herein.

There are also alternate processes for supplying a replacement pixel in the event of overflow of the system. For example, upon the detection of an overflow condition by the overflow detector 68, circuitry may be provided, in place of that shown in FIG. 2, which clips the sample value supplied by adder means 44 on bus 70 to some maximum value. For example, if the range of values varies from binary -128 to a +127, a resulting value greater than +127 is clipped to some value less than 127, etc. Thus all the binary values from the FIR filter would be valid and supplied to the VALID input of the switch means 72 for subsequent output as the pixel replacement value.

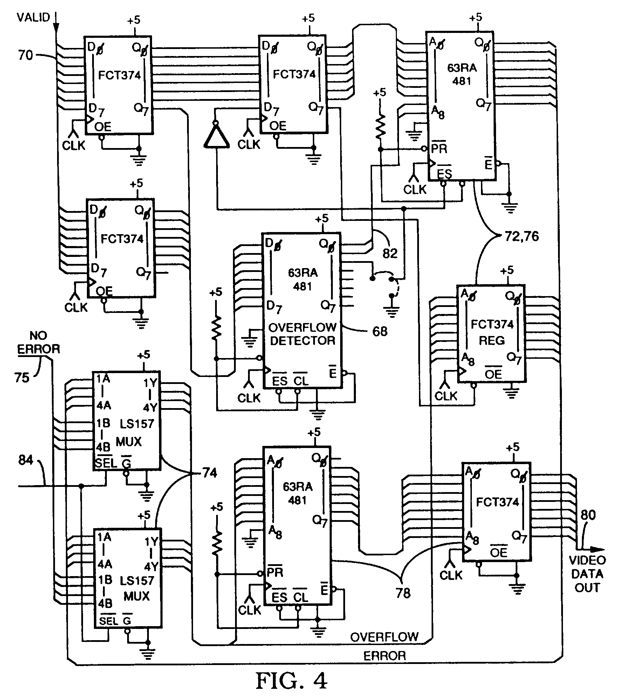

Referring now to FIG. 3, the error pattern register 60 is further shown in schematic. The error flag on the input line 64 of previous mention is supplied to the register 60, along with a blanking signal such as horizontal or composite blanking on a line 86. The signals are supplied to a NAND gate 87, which, in turn, is coupled to the first of two banks of registers 88, 90 which provide 16 serial 1 bit registers clocked in synchronism with the registers 13-27 of FIG. 2. The blanking signal on line 86 disables the error pattern register 60, whereby the concealment process is not performed during a blanking interval. The registers 88, 90 are coupled to an OR gate/PROM circuit 92 and a register 94, wherein circuit 92 and registers 88, 90 together provide the error pattern SELECTION signal on bus 62 extending to the PROMs 48-58. The register 94 supplies a blanking signal to a first of two registers 98, 100 which, in turn, provide the control signal on line 84, and to a NAND gate 101 which controls the switching of the switch means 74 of the overflow circuit (FIG. 4).

The error pattern register 60 shown in FIG. 3, includes the OR/PROM circuit 92 by way of example only, as a means for simplifying the number of components required, as well as to add flexibility to the circuit operation. The OR/PROM circuit 92 provides a form of coarse compression by simultaneously examining a pair of error flags on the most distant pixels relative to the erroneous pixel. More particularly, the circuit 92 examines the five outermost pixel samples at either extreme of the erroneous pixel, and OR's pairs of the symmetrical samples values together to provide one flag for each symmetrical pair of samples. This reduces the number of controls needed from 10 to 5 and provides a more manageable circuit. If either of a pair of pixels is corrupted, both pixel samples are discarded. It is understood that the OR/PROM circuit 92 could be deleted and error flag signals could be supplied to control the examination of each of the outermost five pairs of pixels independently.

Referring to FIG. 4, the components 68, 72, 74, 76 and 78 of FIG. 2 are shown in schematic, and illustrate an implementation for detecting an overflow condition in the FIR filter 10, for correcting the situation, and also for providing a bypass path for supplying the original input video data to the output bus 80 in the event there are no erroneous or corrupted pixels. FIG. 4 further shows the VALID replacement sample signal supplied via the bus 70, and the NO ERROR signal supplied to the switch means 74 via the bus 75. The switch means 72 and register 76 operate together to supply the function shown in block in the FIG. 2, that is, to circulate the most recent valid sample back to the OVERFLOW input of the switch 72. The output from the overflow circuit is shown as the VIDEO DATA OUT signal on output bus 80.

It may be seen that the overflow detector 68 is essentially a comparator which compares two digital words to determine if one value is greater or less than another value. Thus the overflow detector 68 can detect if the adder means 44 is exceeding its range. The rest of the overflow circuitry then provides feedback from the register 76 in the event of an overflow condition to thereby supply the most recent valid sample as the replacement pixel value on the output bus 80. A signal herein labeled ON/OFF is supplied on a line 102 to the NAND gate 101 and provides means for enabling or disabling the overflow circuitry in response to, for example, a computer command.

The discarding or nullifying of any corrupted pixel for the purpose of calculation could be provided by setting the respective filter coefficient to zero or by setting the value of the pixel to zero.

It will be understood that the circuit of Figures 2, 3 and 4 may be replicated in a system handling a component color television signal. That is, a circuit would be required for the luminance component and at least one other circuit is required for the chrominance components such as (R-Y) and (B-Y). The filter for the chrominance circuit may be one-half the size of that shown in Figure 2, mainly because there are only one-half as many chrominance samples as luminance samples in the component color television signal. Multiplexing of the (R-Y) and (B-Y) components may be provided by a double set of registers, wherein there are two registers for every register in the FIR filter 10 of Figure 2. Thus the (R-Y) samples are available at the outputs of their respective multipliers on one clock cycle, and will be shifted down one register at the next clock cycle. At this time the (B-Y) component is available from its respective registers. Thus the (R-Y) and (B-Y) component samples may be calculated on alternate clock cycles.

## Claims

1. A method for concealing an erroneous pixel in a line of pixels of a video signal by means of a replacement pixel calculated from adjacent pixels, which are in a range extending before and after the erroneous pixel and along the same line thereof, and in accordance with filter coefficients respectively associated with the said adjacent pixels, the presence of any corrupted pixel in the range being detected, characterised by discarding the said corrupted pixel from said adjacent pixels in the calculation of the replacement pixel, modifying the filter coefficients of the remaining adjacent pixels to compensate for the effects of discarding the corrupted pixel, and performing the calculation of the replacement pixel in accordance with the modified filter coefficients.

2. A method according to claim 1 wherein the step of modifying includes supplying a plurality of sets of filter coefficients indicative of different adjacent pixel error patterns indicating which of the pixels in the range are corrupt; and utilizing one of the plurality of sets of filter coefficients in response to the step of determining to calculate said replacement pixel.

3. A method according to claim 2 wherein each of the plurality of sets of coefficients is stored in a readable storage means; and the said one of the plurality of sets of coefficients is retrieved from storage in accordance with the determination of the presence of the corrupted pixel or pixels.

4. A method according to any foregoing claim, further comprising detecting an overflow condition which invalidates the said replacement pixel and providing a substitute pixel value to replace the invalid replacement pixel.

5. A method according to any foregoing claim, further comprising bypassing or inhibiting the steps of discarding, modifying and calculating in the absence of any erroneous pixel whereby the line of pixels is passed unchanged to an output.

6. A circuit for concealing an erroneous pixel in a line of pixels of a video signal, comprising filter means (12-43) having a plurality of taps (28-43) for providing a succession of pixels and a like plurality of filter coefficients; and means (28-44) for calculating a replacement pixel from pixels which are in a range extending before and after the erroneous pixel and in the line of pixels in accordance with the filter coefficients, and means (60) for detecting any corrupted pixel in the succession of pixels; characterised by means (48-58,62) for discarding any such corrupted pixel from the calculation and to modify the filter coefficients of the remaining pixels to compensate for the effect of discarding the corrupted pixel or pixels, whereby the said means for calculating performs the calculation of the replacement pixel in accordance with the modified filter coefficients.

7. A circuit according to claim 6 wherein the modifying means include means (48-58) for storing a plurality of sets of filter coefficients indicative of different error patterns in the line of pixels; and said storing means supplies one of the plurality of sets of filter coefficients to the calculating means (28-44) in response to the determining means.

8. A circuit according to claim 7 wherein the storing means (48-58) include a plurality of programmable memories for storing the plurality of sets of filter coefficients associated with different error patterns, said programmable memories being responsive to said determining means (60) to supply one of said plurality of sets of filter coefficients corresponding to the associated error pattern.

9. A circuit according to claim 8, further comprising means (68) for detecting a data overflow condition in the calculating means; and means (72,76) responsive to the detecting means for generating a substitute pixel value to replace the erroneous pixel.

10. A circuit according to claim 9 wherein the generating means includes means responsive to the detecting means for retaining a most recent valid replacement pixel for use as the substitute pixel value in the event of the overflow condition.

11. A system for concealing an erroneous pixel in a succession of pixels in a line of a video signal, comprising a transversal filter (13-27,44) for receiving the pixels and having a plurality of taps for supplying respective pixels of the succession of pixels in the line; characterised by means (60) for determining an error pattern represented by any corrupted pixel or pixels in the succession of pixels and readable memory means (48-66) for supplying a respective set of filter coefficients in accordance with the error pattern, the filter including means (28-44) for forming a weighted sum of pixels excluding any corrupted pixel in the succession in accordance with the said respective set of filter coefficients.

12. A system according to claim 11 wherein the means for forming the weighted sum comprises a plurality of multipliers (28-43) for multiplying a respective pixel of the line of pixels by a respective filter coefficient from the readable memory means to provide a plurality of product values; and summing means (44) for generating a replacement pixel value from the plurality of product values.

13. A system according to claim 11 or 12 wherein said readable memory means (48-66) contain a plurality of sets of filter coefficients corresponding to different error patterns in the line of pixels.

14. A system according to any of claims 11 to 13 wherein the determining means (60) includes register means having a plurality of outputs corresponding to the plurality of taps, for determining the presence and location of the corrupted pixel or pixels; and said readable memory means is responsive to the outputs of the register means to supply one of the plurality of sets of filter coefficients to the plurality of multipliers.

15. A system according to any of claims 11 to 14, further comprising means (74) for causing a line of pixels to bypass the multipliers and summing means in response to the absence of an erroneous pixel.

## Patentansprüche

1. Ein Verfahren zum Verbergen eines fehlerhaften Bildpunktes in einer Zeile von Bildpunkten eines Bildsignals mit Hilfe eines Austauschbildpunktes, der aus benachbarten Bildpunkten berechnet wird, die sich in einem Bereich befinden, der sich vor und hinter dem fehlerhaften Bildpunkt und längs dessen gleicher Zeile erstreckt, und gemäß Filterkoeffizienten, die entsprechend den benachbarten Bildpunkten zugeordnet sind, wobei das Vorliegen von irgendeinem verfälschten Bildpunkt in dem Bereich erfaßt wird, gekennzeichnet durch Ablegen des verfälschten Bildpunkts von den benachbarten Bildpunkten bei der Berechnung des Austauschbildpunktes, Modifizieren der Filterkoeffizienten der verbleibenden benachbarten Bildpunkte zum Kompensieren der Wirkungen des Ablegens des verfälschten Bildpunkts, und Durchführen der Berechnung des Austauschbildpunktes gemäß den modifizierten Filterkoeffizienten.

2. Ein Verfahren nach Anspruch 1, wobei der Schritt des Modifizierens das Zuführen einer Vielzahl von Sätzen von Filterkoeffizienten, die eine Anzeige von verschiedenen benachbarten Bildpunktfehlermustern geben, die anzeigen, welche der Bildpunkte in dem Bereich verfälscht sind; und das Verwenden von einem der Vielzahl von Sätzen von Filterkoeffizienten in Erwiderung auf den Schritt des Bestimmens zum Berechnen des Austauschbildpunktes umfaßt.

3. Ein Verfahren nach Anspruch 2, wobei jeder der Vielzahl von Sätzen von Koeffizienten in einer lesbaren Speichereinrichtung abgespeichert ist; und derjenige von der Vielzahl von Sätzen von Filterkoeffizienten aus dem Speicher gemäß dem Bestimmen des Vorliegens des verfälschten Bildpunktes oder der verfälschten Bildpunkte ausgelesen wird.

4. Ein Verfahren nach einem vorhergehenden Anspruch, das ferner aufweist das Erfassen eines Überlaufzustands, der den Austauschbildpunkt unzulässig macht, und das Vorsehen eines Ersatzbildpunktwertes zum Austauschen des unzulässigen Austauschbildpunktes.

5. Ein Verfahren nach einem vorhergehenden Anspruch, das ferner aufweist das Umgehen oder Sperren der Schritte des Ablegens, Modifizierens und Berechnens beim Fehlen von irgendeinem fehlerhaften Bildpunkt, wodurch die Zeile der Bildpunkte unverändert zu einem Ausgang geführt wird.

6. Eine Schaltung zum Verbergen eines fehlerhaften Bildpunktes in einer Zeile von Bildpunkten eines Bildsignals, die eine Filtereinrichtung (12-43) mit einer Vielzahl von Abgriffen (28-43) zum Vorsehen einer Folge von Bildpunkten und einer ähnlichen Vielzahl von Filterkoeffizienten; und eine Einrichtung (28-44) zum Berechnen eines Austauschbildpunktes aus Bildpunkten aufweist, die in einem Bereich liegen, der sich vor und hinter dem fehlerhaften Bildpunkt und in der Zeile der Bildpunkte erstreckt, gemäß den Filterkoeffizienten, und eine Einrichtung (60) zum Erfassen irgendeines verfälschten Bildpunktes in der Folge von Bildpunkten; gekennzeichnet durch eine Einrichtung (48-58, 62) zum Ablegen irgendeines solchen verfälschten Bildpunktes aus der Berechnung und zum Modifizieren der Filterkoeffizienten der verbleibenden Bildpunkte zum Kompensieren der Wirkung des Ablegens des verfälschten Bildpunktes oder der verfälschten Bildpunkte, wodurch die Einrichtung zum Berechnen die Berechnung des Austauschbildpunktes gemäß den modifizierten Filterkoeffizienten berechnet.

7. Ein Schaltung nach Anspruch 6, wobei die Modifizierungseinrichtung eine Einrichtung (48-58) zum Speichern einer Vielzahl von Sätzen von Filterkoeffizienten umfaßt, die verschiedene Fehlermuster in der Zeile der Bildpunkte anzeigen; und wobei die Speichereinrichtung in Erwiderung auf die Bestimmungseinrichtung einen der Vielzahl von Sätzen von Filterkoeffizienten zur Berechnungseinrichtung (28-44) zuführt.

8. Eine Schaltung nach Anspruch 7, wobei die Speichereinrichtung (48-58) eine Vielzahl programmierbarer Speicher zum Speichern der Vielzahl von Sätzen von Filterkoeffizienten umfaßt, die zu den verschiedenen Fehlermustern gehören, wobei die programmierbaren Speicher auf die Bestimmungseinrichtung (60) zum Zuführen eines der Vielzahl von Sätzen der Filterkoeffizienten anspricht, der zu dem zugeordneten Fehlermuster gehört.

9. Eine Schaltung nach Anspruch 8, ferner aufweisend eine Einrichtung (68) zum Erfassen eines Datenüberlaufzustandes in der Berechnungseinrichtung; und eine Einrichtung (72, 76), die auf die Erfassungseinrichtung zum Erzeugen eines Ersatzbildpunktwertes zum Austauschen des fehlerhaften Bildpunktes anspricht.

10. Eine Schaltung nach Anspruch 9, wobei die Erzeugungseinrichtung eine Einrichtung umfaßt, die auf die Erfassungseinrichtung zum Beibehalten eines kürzlichst gültigen Austauschbildpunktes für die Anwendung als der Ersatzbildpunktwert im Fall des Überlauf zustandes anspricht.

11. Ein System zum Verbergen eines fehlerhaften Bildpunktes in einer Abfolge von Bildpunkten in einer Zeile eines Bildsignals, das ein Transversalfilter (13-27, 44) zum Empfangen der Bildpunkte und eine Vielzahl von Abgriffen zum Zuführen entsprechender Bildpunkte der Abfolge von Bildpunkten in der Zeile aufweist; gekennzeichnet durch eine Einrichtung (60) zum Bestimmen eines Fehlermusters, das durch irgendeinen verfälschten Bildpunkt oder verfälschte Bildpunkte in der Abfolge von Bildpunkten dargestellt wird, und eine lesbare Speichereinrichtung (48-66) zum Zuführen eines entsprechenden Satzes von Filterkoeffizienten entsprechend dem Fehlermuster, wobei das Filter eine Einrichtung (28-44) zum Bilden einer gewichteten Summe von Bildpunkten ausschließlich irgendeines verfälschten Bildpunktes in der Abfolge gemäß dem entsprechenden Satz von Filterkoeffizienten umfaßt.

12. Ein System nach Anspruch 11, wobei die Einrichtung zum Bilden der gewichteten Summe eine Vielzahl von Multiplizierern (28-43) zum Multiplizieren eines entsprechenden Bildpunktes der Zeile von Bildpunkten mit einem entsprechenden Filterkoeffizienten aus der lesbaren Speichereinrichtung zum Vorsehen einer Vielzahl von Produktwerten; und eine Summierereinrichtung (44) zum Erzeugen eines Austauschbildpunktes aus der Vielzahl von Produktwerten aufweist.

13. Ein System nach Anspruch 11 oder 12, wobei die lesbare Speichereinrichtung (48-66) eine Vielzahl von Sätzen von Filterkoeffizienten enthält, die den verschiedenen Fehlermustern in der Zeile von Bildpunkten entsprechen.

14. Ein System nach einem der Ansprüche 11 bis 13, wobei die Bestimmungseinrichtung (16) eine Registereinrichtung mit einer Vielzahl von Ausgängen, die der Vielzahl von Abgriffen entsprechen, zum Bestimmen des Vorliegens und der Stelle des verfälschten Bildpunktes oder der verfälschten Bildpunkte umfaßt; und wobei die lesbare Speichereinrichtung auf die Ausgangswerte der Registereinrichtung zum Zuführen eines der Vielzahl von Sätzen von Filterkoeffizienten zu der Vielzahl von Multiplizierern anspricht.

15. Ein System nach einem der Ansprüche 11 bis 14, ferner aufweisend eine Einrichtung (74) zum Bewirken, daß eine Zeile von Bildpunkten die Multiplizierer- und Addierereinrichtung in Erwiderung auf das Fehlen eines fehlerhaften Bildpunktes umgeht.

## Revendications

1. Procédé pour dissimuler un pixel erroné dans une ligne de pixels d'un signal vidéo au moyen d'un pixel de remplacement calculé à partir de pixels voisins, qui sont dans une plage s'étendant avant et après le pixel erroné et le long de la même ligne que celui-ci, et en fonction de coefficients de filtre respectivement associés auxdits pixels voisins, la présence de tout pixel altéré dans la plage étant détectée, caractérisé : par l'élimination dudit pixel altéré desdits pixels voisins dans le calcul du pixel de remplacement ; par la modification des coefficients de filtre des pixels voisins restants pour compenser les effets de l'élimination du pixel altéré ; et d'exécution du calcul du pixel de remplacement en fonction des coefficients de filtre modifiés.

2. Procédé selon la revendication 1, dans lequel l'étape de modification comprend la délivrance d'une pluralité d'ensembles de coefficients de filtre indicative de combinaisons d'erreurs de pixels voisins différentes indiquant quels sont les pixels de la plage qui sont altérés, et l'utilisation de l'un de la pluralité d'ensembles de coefficients de filtre en réponse à l'étape de détermination pour calculer ledit pixel de remplacement.

3. Procédé selon la revendication 2, dans lequel chacun de la pluralité d'ensembles de coefficients est mémorisé dans un moyen de mémorisation que l'on peut lire ; et dans lequel ; ledit un de la pluralité d'ensembles de coefficients est récupéré dans le moyen de mémorisation en fonction de la détermination de la présence du pixel, ou des pixels, altéré(s).

4. Procédé selon l'une quelconque des revendications précédentes, comprenant, en outre, la détection d'un état de dépassement de capacité qui invalide ledit pixel de remplacement, et la délivrance d'une valeur de pixel de substitution pour remplacer le pixel de remplacement invalidé.

5. Procédé selon l'une quelconque des revendications précédentes, comprenant, en outre, le saut, ou l'inhibition des étapes d'élimination, de modification et de calcul en l'absence de tout pixel erroné, en transmettant ainsi la ligne de pixel à la sortie sans la modifier.

6. Circuit pour dissimuler un pixel erroné d'une ligne de pixels d'un signal vidéo, comprenant : un moyen de filtrage (12 à 43) comportant une pluralité de prises (28 à 43) pour délivrer une succession de pixels, et une pluralité semblable de coefficients de filtres ; et un moyen de calcul (28 à 44) pour calculer, en fonction des coefficients de filtres, un pixel de remplacement à partir de pixels qui sont dans une plage s'étendant avant et après le pixel erroné et dans la ligne de pixel ; et un moyen de détection (60) pour détecter tout pixel altéré dans la succession de pixels ; caractérisé par un moyen d'élimination et de modification (48 à 58, 62) pour éliminer du calcul tout pixel altéré, et pour modifier les coefficients de filtre des pixels restants pour compenser l'effet de l'élimination du pixel, ou des pixels, altéré(s), ledit moyen de calcul effectuant ainsi le calcul du pixel de remplacement en fonction des coefficients de filtre modifiés.

7. Circuit selon la revendication 6, dans lequel le moyen de modification comprend un moyen (48 à 58) pour mémoriser une pluralité d'ensembles de coefficients de filtre indicative de combinaisons d'erreurs différentes dans la ligne de pixels ; et dans lequel ledit moyen de mémorisation délivre l'un de la pluralité d'ensembles de coefficients de filtre au moyen de calcul (28 à 44), en réponse au moyen de détermination.

8. Circuit selon la revendication 7, dans lequel le moyen de mémorisation (48 à 58) comprend une pluralité de mémoires programmables pour mémoriser la pluralité d'ensembles de coefficients de filtre associée aux combinaisons d'erreurs différentes, lesdites mémoires programmables étant sensibles audit moyen de détermination (60) pour délivrer l'un de ladite pluralité d'ensembles de coefficients de filtre correspondant à la combinaison d'erreurs associée.

9. Circuit selon la revendication 8, comprenant, en outre, un moyen (68) de détection d'un état de dépassement de capacité de données dans le moyen de calcul ; et un moyen générateur (72, 76) sensible au moyen de détection pour produire une valeur de pixel de substitution pour remplacer le pixel erroné.

10. Circuit selon la revendication 9, dans lequel le moyen générateur comprend un moyen sensible au moyen de détection pour retenir un pixel de remplacement valide le plus récent pour utilisation comme valeur de pixel de substitution dans le cas de l'état de dépassement de capacité.

11. Système pour dissimuler un pixel erroné dans une succession de pixels dans une ligne d'un signal vidéo, comprenant un filtre transversal (13 à 27, 44) pour recevoir les pixels et comportant une pluralité de prises pour délivrer les pixels successifs de la succession de pixels de la ligne ; caractérisé par un moyen (60) de détermination d'une combinaison d'erreurs représentée par tout pixel, ou tous pixels, altéré(s) dans la succession de pixels et par un moyen de mémorisation que l'on peut lire (48 à 66) pour délivrer un ensemble respectif de coefficients de filtre en fonction de la combinaison d'erreurs, le filtre incluant un moyen (28 à 44) de formation d'une somme pondérée de pixels en excluant tout pixel altéré de la succession en fonction dudit ensemble respectif de coefficients de filtre.

12. Système selon la revendication 11, dans lequel le moyen de formation de la somme pondérée comprend une pluralité de multiplieurs (28 à 43) pour multiplier un pixel respectif de la ligne de pixel par un coefficient de filtre respectif provenant du moyen de mémorisation que l'on peut lire pour donner une pluralité de valeurs de produit ; et un moyen de sommation (44) pour produire une valeur de pixel de remplacement à partir de la pluralité de valeurs de produit.

13. Système selon la revendication 11 ou 12, dans lequel ledit moyen de mémorisation que l'on peut lire (48 à 66) contient une pluralité d'ensembles de coefficients de filtre correspondant à des combinaisons d'erreurs différentes dans la ligne de pixels.

14. Système selon l'une quelconque des revendications 11 à 13, dans lequel le moyen de détermination (60) comprend un moyen formant registre ayant une pluralité de sorties correspondant à la pluralité de prises, pour déterminer la présence et l'emplacement du pixel, ou des pixels, altéré(s) ; et dans lequel ledit moyen de mémorisation que l'on peut lire est sensible aux sorties du moyen formant registre pour délivrer l'un de la pluralité d'ensembles de coefficients de filtre à la pluralité de multiplieurs.

15. Système selon l'une quelconque des revendications 11 à 14, comprenant, en outre, un moyen (74) pour faire en sorte qu'une ligne de pixels saute les multiplieurs et le moyen de sommation en réponse à l'absence de pixel erroné.
